# EUROPEAN PATENT SPECIFICATION

(11) **EP 1 318 653 B1**
(45) Date of publication and mention of the grant of the patent: **04.10.2006**
(21) Application number: 01830754.6
(22) Date of filing: 10.12.2001
(51) Int. Cl.: H04M 3/00, H04M 11/06, H04M 19/00

(54) **Line interface for combining a voice band signal and an XDSL signal on a twisted-pair copper line**
Leitungsschnittstelle zum kombinieren eines Sprachbandsignals mit einem XDSL Signal auf einer verdrillten Kupferleitung
Circuit d'interface pour combiner des signaux XDSL et vocal par paires torsadées de ligne de cuivre

(43) Date of publication of application: 11.06.2003
(73) Proprietor: STMicroelectronics S.r.l., 20041 Agrate Brianza (Milano) (IT)
(72) Inventor: Lari, Ferdinando, 20059 Vimercate-Milano (IT); Devecchi, Daniele, 20033 Desio-Milano (IT); Vizzi, Emanuela, 20133 Milano (IT)
(74) Representative: Siniscalco, Fabio

(56) References cited:
- EP-A- 1 156 655
- US-A- 4 864 609
- US-A- 6 067 316

## Description

The present invention concerns access networks for advanced telecommunication services and, more particularly, a line interface for combining telephony and XDSL signals on the same twisted-pair copper line.

The growing demand for residential broad-band communication services has led to the development of technologies that utilize the twisted-pair copper line traditionally employed for telephone services as the physical support for accessing the service provider networks.

These technologies, generally known as XDSL (X Digital Subscriber Loop) systems, have affirmed themselves in recent years on account of being economically more advantageous than other solutions that call for the installation of such new and costly infrastructures as, for example, microwave access networks (LMDS being a case in point) or optical fibre networks.

A technology that has particularly affirmed itself within the ambit of the variegated family of the XDSL systems is the one known as ADSL (Asymmetric Digital Subscriber Loop), a technology that in a very efficient manner offers transmission services for which the data flow received by the user is greater than the one he directs towards the network.

The ADSL coexists with traditional telephony (or voice) services and utilizes portions of the transmission band of the copper line not superposed on the frequencies employed for telephony.

In this way, differently from what happens in the case of modems operating in the voice band, telephone communications can be effected even while a data transmission (a connection to Internet, for example) is taking place.

The voice services (complete with the associated signalling) utilize the 0-16 kHz band of the twisted-pair copper line, while the ADSL uses the range of frequencies comprised between 30 kHz and 1.1 MHz, transmitting with a multi-carrier DMT (Discrete Multi Tone) modulation.

The ADSL subdivides the available frequency spectrum into two bands, the first (from 30 kHz to 138 kHz) for the data flow from the user towards the network (upstream path), the second (from 138 kHz to 1.1 MHz) for the data flow in the opposite direction (downstream path).

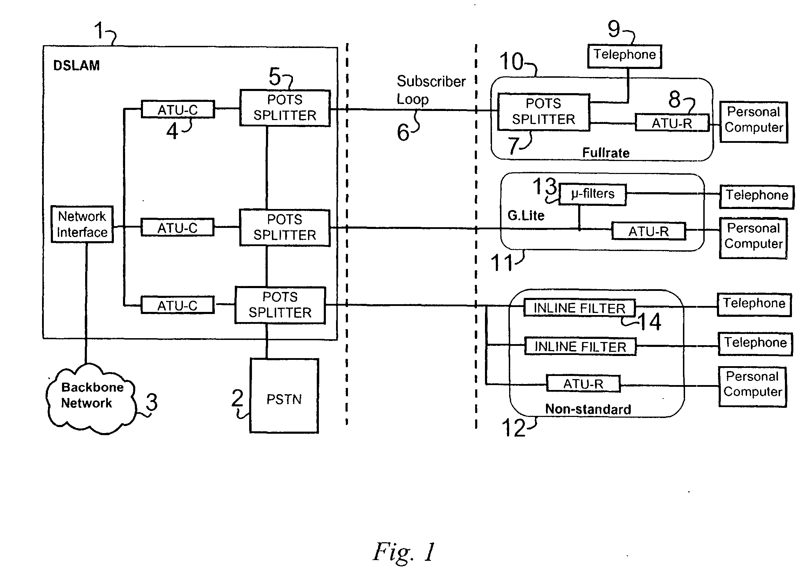

The architecture of an ADSL access network is shown in Figure 1. The central office electronic equipment and circuits for the transmission and reception of the ADSL signals is contained in racks 1, known as DSLAM (Digital Subscriber Line Access Multiplexers), that are generally situated in the vicinity of the PSTN (Public Switched Telephonic Network) telephone exchanges 2.

The multiplexer racks 1 constitute the node for accessing high-capacity service provider network 3, the so-called Backbone Network.

Each ADSL signal generated by a central office modem 4, generally referred to as ATU-C (ADSL Terminal Unit - Central Office), is coupled by means of a POTS splitter 5 to a twisted-pair cable 6 traditionally used for the transmission of telephone signals.

Just as happens in the case of telephone equipment, the transmission flow of the central office ADSL equipment is bi-directional: the central office POTS splitter 5 functions as a coupler in one direction and as a splitter in the other.

Another POTS splitter 7 at the user end, bidirectionally couples the copper cable 6 to both the user modem 8, generally referred to as ATU-R (ADSL Terminal Unit - Remote), and a traditional telephone apparatus 9. This is done in an architecture 10, the so-called full-rate ADSL, capable of ensuring maximum transmission capacity.

There are also other solutions, likewise shown in Figure 1, commonly employed for the user-side terminations. The terminations 11 (ADSL G.Lite) and 12 (ADSL non-standard), for example, do not employ POTS splitters, the place of which is taken by less voluminous. Easy to install and cheaper filters (microfilters 13 or, in-line filters 14). Though these terminations provide a somewhat smaller transmission capacity then full-rate ADSL, they are nevertheless capable of offering residential services in line with effective present-day needs.

The POTS splitter 5, which has to couple voice and data flows and must also sustain signals of very substantial amplitude in either direct current or very low frequency AC, is realized in high-voltage technology. Superposed on the voice signal, in fact, there is present the DC feed signal (50/60 V) of the telephone apparatus and, during the actual calling phase, also a low-frequency ringer signal (up to 110 V rms).

When realized in conformity with high-voltage technology, a splitter with good linearity characteristics, as is required for ADSL purposes, is necessarily a costly and rather voluminous device.

Numerous solutions have been proposed with a view to eliminating the splitter, especially the one installed in the vicinity of the central office, because - as has already been suggested, valid alternatives are already available for the user-side terminations.

US 6,067,316 discloses a line card circuit for a central office of a telecommunication system, having an A/D converter and a D/A converter by which both PCM signals and xDSL signals are transmitted. The combined POTS and xDSL signals are transformer coupled for both transmission and reception from a local loop. A POTS filter is provided for filtering any high frequency noise components both incoming and outgoing to the local loop 24.

Another reason for eliminating the splitter 5 is bound up with the fact that for the service operators it is a fundamental requirement to reduce the space occupied by the central office equipment to a bare minimum, because the cost of this space is very considerable.

In the most recently introduced access solutions the physical separation between the central office equipment handling voice signals and their counterparts for data signals is no longer very neat and the present trend is to integrate everything on a single circuit board, thus facilitating the elimination of the POTS splitter.

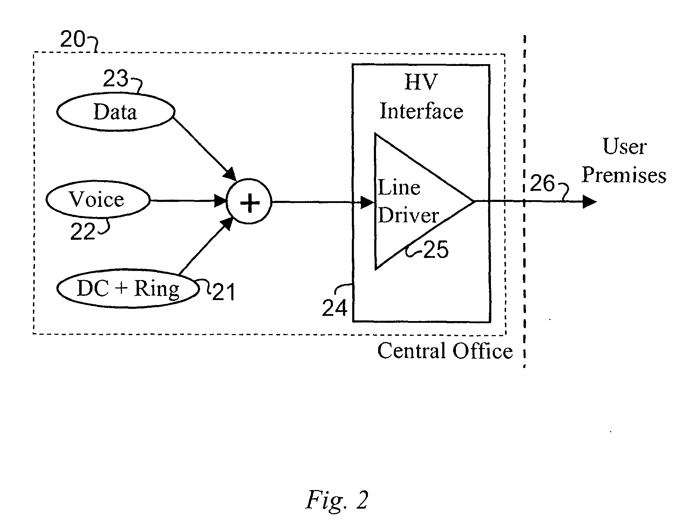

Referring to Figure 2 and considering the transmission direction, i.e. from the central office to the user, a central office circuit board 20 integrating the circuits for voice and data signals is used to sum the telephone signals 21 and 22 with the data signals 23 upstream of the line interface 24. The final stage of this interface is a wide-band amplifier 25, or line driver, that pilots the line 26 and is realized in high-voltage technology.

Although this solution avoids the use of a splitter on the central office side, it is associated with a considerable drawback that derives from the excessive power dissipated by the arrangement and, more particularly, the line driver 25.

The output dynamic range of this amplifier has to be very high, because the amplifier will be required to transmit to the twisted-pair copper line 26 the sum of the DC telephone feed signal (50 V DC), the ringer signal (in this type of board typically 60 V rms), the voice signal and the high-frequency data signal (in the case of ADSL 18/20 V peak).

Consequently, the circuit board 20 for integrated voice and data services has to be provided with a considerable feed voltage, not less than 85-90 Volt. In these conditions the overall power dissipation will be heavily penalized as compared with solution in which the final line interface stages are separated and optimised for the different signal typologies (voice/data) and which, for this very reason, can make do with smaller feed voltages.

The present invention therefore sets out to propose a solution in which the voice and data transmission components are integrated on one and the same circuit board and which does not give rise to the drawbacks associated with the prior art as described above.

According to the invention this aim can be attained with a line interface as described in general terms in Claim 1 hereinbelow.

The invention will be understood more clearly in the light of the detailed description of a particular embodiment thereof given below, which is to be considered as an example and not limitative in any way, said description making reference to the attached drawings of which:
- Figure 1 shows the architecture of a traditional ADSL access system,
- Figure 2 shows, albeit schematically, a circuit board for integrated voice/data services according the prior art, and
- Figure 3 shows the somewhat simplified layout of a circuit board for integrated voice/data services that employs a line interface in accordance with the invention.

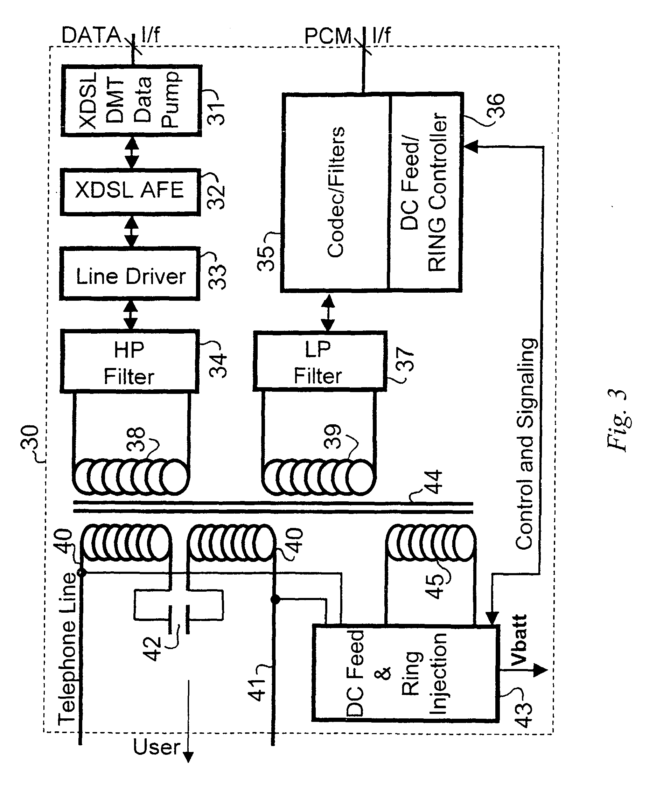

As can be seen from Figure 3, in a preferred embodiment of the present invention the traditional telephone service circuitry is integrated on the circuit board 30, which accommodate the circuits handling the XDSL signals. In particular, in the upper part of the board, in the transmission direction from the central office to the user, the digital XDSL signal, synthesized by the block 31 (XDSL DMT Data Pump), is converted into an analog signal by the block 32 (XDSL AFE, Analog Front End) and subsequently amplified by the line driver 33, which is optimised for the transmission of XDSL signals.

A high-pass filter 34 on the output side of line driver 33 eliminates any spurious low-frequency that might be present and could constitute a troublesome interference source for the telephony signals.

In the lower part of the board, still considering the transmission direction from the central office to the user, a PCM telephone signal is processed by the block 35 (Codec/Filters), this in analogy with what happens in traditional solution for telephony only. The sole difference with respect to prior art consists of the fact that the block 35 includes a control section 35 (DC Feed/Ring Controller). The telephone signal is then processed by a low-pass filter 37, which is not affected by DC components.

The filters 34 and 37 pilot, respectively, two primary windings 38 and 39 of a line transformer of which the secondary winding 40, in its turn, pilots the telephone line 41. An important characteristic of the present invention is the fact that the secondary winding 40 of the line transformer is AC coupled to the twisted-pair cable 41. This is obtained, for example, by inserting a decoupling condenser 42 in series with the secondary winding 40, interrupting the said secondary winding at some intermediate point. Obviously, the configuration shown in Figure 3 is not binding and the capacitance 42 can be inserted at any other point, always provided that it remains in series with the secondary winding 40.

In this way the line transformer, not being affected by DC components, can be realized very simply and cheaply and will also be small in size.

In Figure 3 - and solely by way of example - the data and voice signals are coupled to two distinct primary windings 38 and 39. In a different embodiment, however, the data and voice signals could be summed at any other point before the line transformer and coupled inductively to the secondary winding 40 via a single primary winding.

The functions of providing the DC feed for the user telephones and injecting the ring signal into the copper line 41 are realized by an interface circuit in high-voltage technology, which in Figure 3 is represented by the block 43 (DC Feed & Ring Injection), which is connected in parallel to the secondary winding 40 of the line transformer.

Block 43 operates under the control and management of the DC Feed/Ring Controller section 36 of block 35.

Even though the capacitance 42 in series with the two secondary windings 40 is capable of insulating the secondary winding 40 from direct current components, it does not completely insulate the core 44 of the transformer from interference due to the injection of the ring signal (16-60 Hz) during the call phase. This happens because the capacitor 42 is designed in such a way as to consent the passage of the low-frequency components of the voice signal (20 Hz).

The interference due to the ring signal causes the working point of the magnetic characteristics of the transformer core 44 to become displaced, thus giving rise to possible non-linearity conditions.

This effect exerts a negative influence on the performance of the ADSL transmission, which employs QAM signals of high spectral efficiency (up to 8096 QAM) and is therefore very sensitive both to intermodulation and module and phase variations, so that it calls for conditions of absolute linearity throughout the transmission chain.

For this reason, a compensation winding 45 is provided for the purpose of eliminating or reducing any flow variations in the transformer core 44 that may be induced by the injection of the ring signal.

This effect may be obtained, for example, by injecting a copy of the ring signal with an appropriately calibrated amplitude and phase into the compensation winding 45 via the block 43 during the call phase. This signal can set up a counterflow in the core of the line transformer to cancel or attenuate the undesired flow induced by the ring signal.

In this embodiment the block that sums the ring signal also performs the function of compensating the negative effect produced by this signal; this fact simplifies the phase of setting and calibrating the circuit board and also renders it more accurate.

The injection of the compensation signal is effected only during the call phase, i.e. when all the digital signal processing (DSP) are inactive. For this reason no additional hardware resources have to be provided for performing this function.

Furthermore, the proposed solution effects the compensation without altering the configuration of the interface from the circuit point of view. This makes it possible to avoid varying the impedance at the terminals of each winding and to keep the line impedance matching constant in time, a requirement that is quite indispensable for assuring the continuity and quality of the XDSL connection.

## Claims

1. A line interface (30) for combining a broad-band XDSL signal and a voice-band telephone signal in a twisted-pair copper line (41), where the voice-band signal, over and above the voice signal, carries a DC feed for the user telephone and, during the call phase, also a ring signal, said line interface (30) comprising:
- a line transformer having at least a primary winding (38, 39) for receiving said XDSL signal and said voice signal, said line transformer having also a secondary winding (40) connectable to said line (41) for piloting said line (41) with said XDSL signal and said voice signal;
- a circuit (43) connected in parallel with said secondary winding (40) for injecting both said ring signal and said DC feed signal into said line (41);
**characterized in that**
said line interface (30) further comprises DC decoupling means (42) connected to said secondary winding, for DC decoupling said secondary winding (40) from said circuit (43) and from said line (41) for preventing said DC feed signal from flowing into said secondary winding (40).

2. A line interface (30) in accordance with Claim 1, wherein the DC decoupling means include capacitive decoupling means (42) arranged in series with said secondary winding (40).

3. A line interface (30) in accordance with Claim 2, wherein the capacitive decoupling means comprise at least one capacitor (42) series-connected with the secondary winding (40) in such a manner as to interrupt it at some intermediate point.

4. A line interface (30) in accordance with any one of the preceding claims, wherein the line transformer comprises at least one further winding (45) for compensating flow variations induced in the core (44) of the line transformer by the ring signal during the call phase.

5. A line interface (30) in accordance with Claim 4, wherein the circuit (43) is such to inject the same ring signal into said further winding (45) during the call phase as is injected into the twisted-pair copper line (41), with amplitude and phase adjusted in such a manners as to eliminate or reduce the flow variations induced in the core (44) of the line transformer.

6. A line interface (30) in accordance with any one of the preceding claims, including at least one high-pass or band-pass filter (34) coupled to the primary winding of the line transformer for filtering said XDSL signal.

7. A line interface (30) in accordance with any one of the preceding claims, further including at least one low-pass filter (37) coupled to the primary winding of the line transformer.

8. A line interface (30) in accordance with any one of the preceding claims, wherein said at least one primary winding (38, 39) includes a first primary winding (38) for receiving the XDSL signal and a second primary winding (39) for receiving the voice signal.

## Patentansprüche

1. Eine Leitungsschnittstelle (30) zum Kombinieren eines Breitband-XDSL-Signals und eines Sprachbandtelefonsignals in einer paarverdrillten Kupferleitung (41), wobei das Sprachbandsignal über das und über dem Sprachsignal eine Gleichsignalzuführung für das Benutzertelefon und während der Anrufphase auch ein Klingelsignal trägt, wobei die Leitungsschnittstelle (30) folgende Merkmale aufweist:
- einen Leitungstransformator, der zumindest eine Primärwicklung (38, 39) zum Empfangen des XDSL-Signals und des Sprachsignals aufweist, wobei der Leitungstransformator ferner eine Sekundärwicklung (40) aufweist, die zum Ausloten der Leitung (41) mit dem XDSL-Signal und dem Sprachsignal mit der Leitung (41) verbindbar ist;
- eine Schaltung (43), die mit der Sekundärwicklung (40) zum Injizieren sowohl des Klingelsignals als auch des Gleichsignalzuführungssignals in die Leitung (41) parallelgeschaltet ist;
**dadurch gekennzeichnet, dass**
die Leitungsschnittstelle (30) ferner eine Gleichsignalentkopplungseinrichtung (42) aufweist, die mit der Sekundärwicklung verbunden ist, zum Gleichsignalentkoppeln der Sekundärwicklung (40) von der Schaltung (43) und von der Leitung (41) zum Verhindern, dass das Gleichsignalzuführungssignal in die Sekundärwicklung (40) fließt.

2. Eine Leitungsschnittstelle (30) gemäß Anspruch 1, bei der die Gleichsignalentkopplungseinrichtung eine kapazitive Entkopplungseinrichtung (42) umfasst, die mit der Sekundärwicklung (40) in Reihe angeordnet ist.

3. Eine Leitungsschnittstelle (30) gemäß Anspruch 2, bei der die kapazitive Entkopplungseinrichtung zumindest einen Kondensator (42) aufweist, der mit der Sekundärwicklung (40) auf eine derartige Weise in Reihe geschaltet ist, um dieselbe an einem gewissen Zwischenpunkt zu unterbrechen.

4. Eine Leitungsschnittstelle (30) gemäß einem der vorhergehenden Ansprüche, bei der der Leitungstransformator zumindest eine weitere Wicklung (45) zum Kompensieren von Flussvariationen aufweist, die in dem Kern (44) des Leitungstransformators durch das Klingelsignal während der Anrufphase bewirkt werden.

5. Eine Leitungsschnittstelle (30) gemäß Anspruch 4, bei der die Schaltung (43) derart ist, um während der Anrufphase in die weitere Wicklung (45) das gleiche Klingelsignal zu injizieren, das in die paarverdrillte Kupferleitung (41) injiziert wird, wobei eine Amplitude und eine Phase auf derartige Weisen eingestellt sind, um die Flussvariationen zu eliminieren oder zu reduzieren, die in dem Kern (44) des Leitungstransformators bewirkt werden.

6. Eine Leitungsschnittstelle (30) gemäß einem der vorhergehenden Ansprüche, die zumindest ein Hochpass- oder Bandpassfilter (34) umfasst, das mit der Primärwicklung des Leitungstransformators zum Filtern des XDSL-Signals gekoppelt ist.

7. Eine Leitungsschnittstelle (30) gemäß einem der vorhergehenden Ansprüche, die ferner zumindest ein Tiefpassfilter (37) umfasst, das mit der Primärwicklung des Leitungstransformators gekoppelt ist.

8. Eine Leitungsschnittstelle (30) gemäß einem der vorhergehenden Ansprüche, bei der die zumindest eine Primärwicklung (38, 39) eine erste Primärwicklung (38) zum Empfangen des XDSL-Signals und eine zweite Primärwicklung (39) zum Empfangen des Sprachsignals umfasst.

## Revendications

1. Interface ligne (30) destinée à combiner un signal XDSL large bande et un signal téléphonique à bande vocale dans une ligne de cuivre à paire torsadée (41) où le signal de bande vocale, sur et au-dessus du signal vocal, porte une alimentation DC pour le téléphone utilisateur et, durant la phase d'appel, aussi un signal de sonnerie, ladite interface ligne (30) comprenant :
- un transformateur de ligne possédant au moins un enroulement primaire (38, 39) destiné à recevoir ledit signal XDSL et ledit signal de voix, ledit transformateur de ligne possédant aussi un enroulement secondaire (40) connectable à ladite ligne (41) pour piloter ladite ligne (41) avec ledit signal XDSL et ledit signal vocal ;
- un circuit (43) connecté en parallèle audit enroulement secondaire (40) pour injecter à la fois ledit signal de sonnerie et ledit signal d'alimentation DC dans ladite ligne (41) ;
**caractérisée en ce que**
ladite interface ligne (30) comprend de plus un moyen de découplage DC (42) connecté audit enroulement secondaire pour découpler du point du vue DC ledit enroulement secondaire (40) dudit circuit (43) et de ladite ligne (41) pour prévenir le passage dudit signal d'alimentation DC dans ledit enroulement secondaire (40).

2. Interface ligne (30) selon la revendication 1, dans laquelle le moyen de découplage DC comprend un moyen de découplage capacitif (42) agencé en série avec ledit enroulement secondaire (40).

3. Interface ligne (30) selon la revendication 2, dans laquelle le moyen de découplage capacitif comprend au moins un condensateur (42) connecté en série à l'enroulement secondaire (40) de manière à l'interrompre en un certain point intermédiaire.

4. Interface ligne (30) selon l'une quelconque des revendications précédentes, dans laquelle le transformateur de ligne comprend au moins un enroulement supplémentaire (45) pour compenser les variations de flux induites dans le coeur (44) du transformateur de ligne par le signal de sonnerie durant la phase d'appel.

5. Interface ligne (30) selon la revendication 4, dans laquelle le circuit (43) est tel qu'il injecte le même signal de sonnerie dans ledit enroulement supplémentaire (45) durant la phase d'appel que celui qui est injecté dans la ligne de cuivre à paire torsadée (41), avec une amplitude et une phase ajustées de manière à éliminer ou à réduire les variations de flux induites dans le coeur (44) du transformateur de ligne.

6. Interface ligne (30) selon l'une quelconque des revendications précédentes, comprenant au moins un filtre passe-haut ou passe-bande (34) relié à l'enroulement primaire du transformateur de ligne pour filtrer ledit signal XDSL.

7. Interface ligne (30) selon l'une quelconque des revendications précédentes, comprenant de plus au moins un filtre passe-bas (37) relié à l'enroulement primaire du transformateur de ligne.

8. Interface ligne (30) selon l'une quelconque des revendications précédentes, dans laquelle ledit au moins un enroulement primaire (38, 39) comprend un premier enroulement primaire (38) pour recevoir le signal XDSL et un second enroulement primaire (39) pour recevoir le signal de voix.
